# EUROPÄISCHE PATENTANMELDUNG

(11) **EP 1 889 771 A2**
(43) Veröffentlichungstag der Anmeldung: **20.02.2008**
(21) Anmeldenummer: 07015369.7
(22) Anmeldetag: 06.08.2007
(51) Int. Cl.: B62B 3/14

(54) **Einkaufswagen**

(30) Priorität: 18.08.2006 DE 102006038774
(71) Anmelder: Wanzl Metallwarenfabrik GmbH, 89336 Leipheim (DE)
(72) Erfinder: Thalhofer, Armin, 89312 Günzburg-Wasserburg (DE)

(57) **Zusammenfassung**

Die Erfindung betrifft einen stapelbarer Einkaufswagen mit einer Schiebeeinrichtung (2) und einem Fahrgestell (3) mit Rollen (4), wobei das Fahrgestell (3) einen Korb (5) trägt, wobei die Schiebeeinrichtung (2) ein Münzpfandsystem (6) aufweist und wobei am Münzpfandsystem (6) eine Haltevorrichtung (8) vorgesehen ist.

Die Erfindung zeichnet sich dadurch aus, dass die Haltevorrichtung (8) mindestens eine Klammer (9) aufweist, wobei die mindestens eine Klammer (9) wechselbar am Münzpfandsystem (6) angeordnet ist.

## Beschreibung

Die-Erfindung -betrifft einen Einkaufswagen mit den Merkmalen im Oberbegriff des Hauptanspruchs.

Einkaufswagen dieser Gattung werden zum Transportieren von Ware, Gepäck oder anderen Gegenständen eingesetzt. Sie finden insbesondere Einsatz in Supermärkten.

Ein Einkaufswagen dieser Gattung ist beispielsweise aus den europäischen Patentschriften EP 0985 200 B1 und EP 0 937 626 B1 bekannt. Ein solcher stapelbarer Wagen weist ein Gestell mit Rollen auf, wobei auf dem Gestell ein Korb ortsfest angeordnet ist. Jedes Gestell ist mit einem Schiebegriff versehen. Am Schiebegriff ist ein Münzpfandsystem zur Koppelung gleicher Wagen vorgesehen. Wie in den beiden europäischen Patentschriften beschrieben und dargestellt, stellt das Münzpfandsystem ein Teil des Schiebegriffs dar.

Das Münzpfandsystem weist ein Mittelstück auf, das vorzugsweise für die Aufnahme eines Werbeträgers und oder eine sonstige Informationseinrichtung vorgesehen ist.

Weiterhin gehört zum Stand der Technik ein Einkaufswagen, der am Schiebegriff ein Münzpfandsystem vorsieht, das eine Haltevorrichtung für einen Handscanner aufweist. Diese Haltevorrichtung kann, wie sie die deutsche Patentanmeldung DE 196 19 681 A1 beschreibt, in Form einer Ausformung gestaltet sein. Auch besteht die Möglichkeit, dass das Münzpfandsystem einen Schacht für die Aufnahme eines Scanners eine Haltevorrichtung aufweist. An der Haltevorrichtung ist dann, oberhalb des Münzpfandsystems ein Scanner angeordnet.

Eine solche Art einer Haltevorrichtung hat sich jedoch als nachteilig erwiesen. Sie nimmt sehr viel Raum ein und kann leicht abbrechen oder anderweitig beschädigt werden.

Ist ein Münzpfandsystem, wie es aus den europäischen Patentschriften bekannt ist, vorgesehen, nimmt dieses bereits sehr viel Raum ein. Das Anbringen eines Scanners oder eines anderen Bauteiles mittels einer Haltevorrichtung würde weiteren Raum im Bereich der Schiebeeinrichtung einnehmen. Das Schieben würde nachteilig beeinträchtigt werden, oder aber sehr viel Raum zwischen Schiebegriff und Korb wäre für das Anordnen eines weiteren Bauteils notwendig, was zu Nachteilen beim Stapeln gleicher Wagen führt.

Die Aufgabe der Erfindung besteht darin, eine verbesserte Haltevorrichtung zu beschreiben.

Die Erfindung löst die Aufgabe mit den Merkmalen im kennzeichnenden Teil des Hauptanspruchs.

Mittels der verbesserten Haltevorrichtung kann der Raum oberhalb des Münzpfandsystems genutzt werden.

Aufgrund der wechselbaren Anordnung ist die Möglichkeit gegeben, bei Bedarf ein weiteres Bauteil, wie z.B. einen Handscanner, anzuordnen.

Es ist eine Verrastung der Haltevorrichtung mit dem Münzsystem vorgesehen, so dass Unbefugte die Haltevorrichtung nicht selbständig lösen können. Das Einrasten der Haltevorrichtung am Münzsystem bietet eine schnelle und somit kostengünstige Montage.

Weiterhin wird das Münzpfandsystem durch diese Art des Anordnens nicht beschädigt. Sollte der Wunsch bestehen, keine Haltevorrichtung mehr anzubringen, kann die Haltevorrichtung abmontiert werden und das Münzpfandsystem unbeschädigt eingesetzt werden.

Die Erfindung wird anhand eines Ausführungsbeispiels näher erläutert. Es zeigt
- Fig. 1: eine Klammer in Seitenansicht;
- Fig. 2: die Klammer angeordnet an einem Münzpfandsystem in Seitenansicht sowie
- Fig. 3: eine Haltevorrichtung mit einer Klammer angeordnet am Münzpfandsystem wiederum in Seitenansicht.

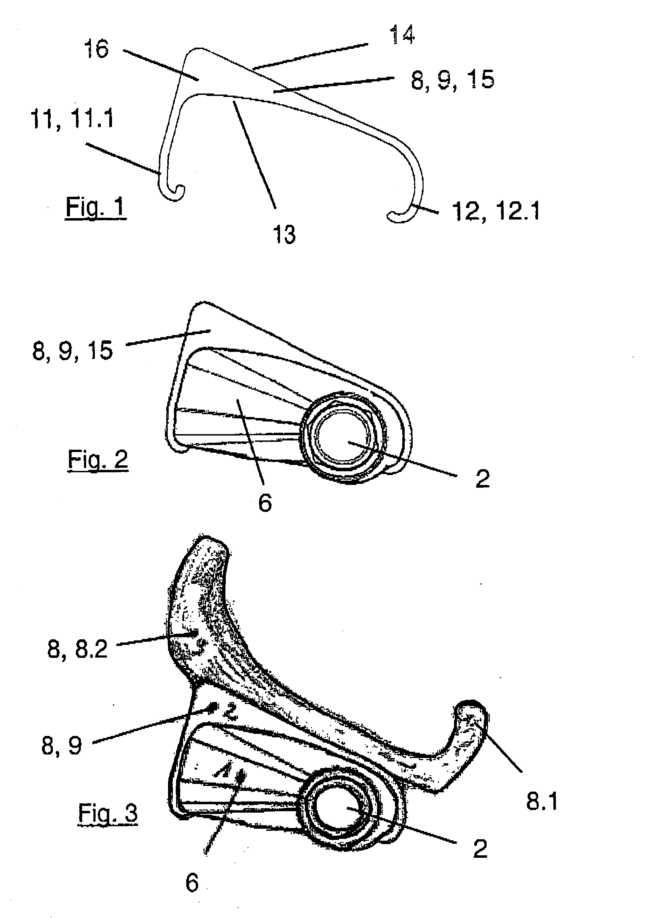

Fig. 1 zeigt ein Haltevorrichtung 8. Diese ist zum Anklipsen an ein Münzpfandsystem 6, mit welchen üblicherweise Einkaufswagen 1 ausgestattet sind, vorgesehen.

Jeder Wagen 1 ist in gleiche Wagen 1 stapelbar. In gestapeltem Zustand sind die Wagen 1 mittels eines Münzpfandsystems 6 aneinander befestigt. Der Wagen 1 weist zum Schieben eine Schiebeeinrichtung 2 auf. An der Schiebeeinrichtung 2 ist das Münzpfandsystem 6 angeordnet. Üblicherweise weist die Schiebeeinrichtung 2 das Münzpfandsystem 6 auf. Das Münzpfandsystem 6, somit als Bestandteil der Schiebeeinrichtung 2, ist vorzugsweise mit einem oder zwei Sehiebegriffabschnitten ausgestattet.

Jeder Wagen 1 weist einen Korb 5 für die Aufnahme von Ware auf. Der Korb 5 wird von einem Fahrgestell 3 getragen. Am Fahrgestell 3 sind Rollen 4 angeordnet.

In Fig. 2 ist eine Haltevorrichtung 8 dargestellt, die auf ein Münzpfandsystem 6 geklipst ist. Hierfür ist wenigstens eine Klammer 9 vorgesehen. Die Klammer 9 weist eine linke Seite 11 und eine rechte Seite 12 auf. Die linke Seite 11 ist an ihrem Ende in Form eines Hakens 11.1 gebildet, der derart ausgeführt ist, dass er in der Unterseite des Münzpfandsystems 6 einrastet.

Das ist möglich, da das Münzpfandsystem 6 an seiner Unterseite Bereiche aufweist, die nicht vollflächig ausgebildet sind. Die Gestalt und Größe des Hakens 11.1 kann somit beliebig gebildet sein, solange ein wechselbares Einrasten des Hakens 11.1 an der Unterseite des Münzpfandsystems 6 gegeben ist.

Auch die rechte Seite 12 der Klammer 9 weist einen Haken 12.1 auf. Dieser ist ebenfalls zum Einrasten an der Unterseite des Münzpfandsystems 6 vorgesehen.

Zunächst wird die linke Seite 11 mittels des Haken 11.1 an der Unterseite des Münzpfandsystems 6 eingehängt. Schließlich wird durch das Einrasten des Hakens 12.1 der rechten Seite 12 die Klammer 9 wechselbar am Münzpfandsystem 6 fixiert. Es ist eine nicht unerhebliche Kraft notwendig, um die Klammer 9 wieder zu lösen. Dies hat den Vorteil, dass ein Wechseln oder Lösen der Klammer 9 nicht durch Unbefugte durchgeführt werden kann.

Jede Klammer 9 weist eine Innenseite 13 und eine Außenseite 14 auf. Die Innenseite 13 ist in ihrer Form derart gestaltet, dass sie einen Formschluss mit der Oberseite des Münzpfandsystems 6 bildet. Die Außenseite 14 kann beliebig gestaltet sein, es bietet sich eine Form an, die eine Neigung 15 aufweist. Die Neigung 15 ist vorzugsweise derart ausgebildet, wie sie in den Fig. 1 bis 3 dargestellt ist.

Die Klammer 9 weist einen mit Material verstärkten Bereich 16 auf. Dieser verleiht den beiden Seiten 11, 12 der Klammer 9 eine leicht federnde Eigenschaft und verhindert weiterhin ein Brechen der Klammer 9.

Die Höhe der Klammer 9 richtet sich nach der Höhe des Münzpfandsystems 6.

Die Haltevorrichtung 8 weist vorzugsweise eine Klammer 9 auf. Es können aber auch zwei oder mehrere Klammern 9 vorgesehen sein. Die Breite der Klammer 9 kann beliebig gebildet sein. Maximal entspricht die Breite der Klammer 9 die Breite des Münzpfandsystems 6. Die Klammer 9 kann an der Haltevorrichtung 8 wechselbar oder ortsfest angeordnet sein.

Vorzugsweise ist sowohl die Haltevorrichtung 8 aus einem Kunststoff gefertigt. Eine Fertigung mittels eines Spritzgussverfahrens hat sich als vorteilhaft erwiesen. Daher bietet es sich an, die Haltevorrichtung 8, insbesondere Haltevorrichtung 8 mit Klammer 9, einteilig herzustellen. Die Haltevorrichtung 8 kann auch mehrteilig ausgebildet sein.

In Fig. 2 ist eine Haltevorrichtung 8 in Form einer Klammer 9 auf einem Münzpfandsystem 6 angeordnet. Die Haltevorrichtung 8 weist ein weiteres Bauteil 7, wie z.B. einen nicht näher dargestellten Handscanners 10, auf.

Die Breite der Haltevorrichtung 8 ist entsprechend der Breite des Handscanners 10 ausgeführt. Vorzugsweise ist die Haltevorrichtung 8 derart gestaltet, dass der Scanner 10 im unteren Bereich 8.1 aufliegt und durch einen oberen Bereich 8.2 fixiert ist. Der untere Bereich 8.1 ist vorzugsweise in Form einer vollflächigen Aufnahme für den Handscanner 10 ausgeführt, während der obere Bereich 8.2 vorzugsweise in Form eines Haltebügels gestaltet. Das ermöglicht ein einfaches Herausnehmen des Scanners 10 auch nur mit einer Hand.

Die Haltevorrichtung 8 kann auch für die Wiedergabe von Informationen wie Werbung, Weghinweisen ect. vorgesehen sein.

### Bezugszeichenliste

- 1: Einkaufswagen
- 2: Schiebeeinrichtung
- 3: Fahrgestell, Gestell
- 4: Rollen
- 5: Korb
- 6: Münzpfandsystem
- 7: Bauteil
- 8: Haltevorrichtung
- 8.1: unterer Bereich
- 8.2: oberer Bereich
- 9: Klammer
- 10: Scanner, Handscanner
- 11: linke Seite der Klammer
- 11.1: Haken linke Seite
- 12: rechte Seite der Klammer
- 12.1: Haken rechte Seite
- 13: Innenseite der Klammer
- 14: Außenseite der Klammer
- 15: Neigung
- 16: verstärkter Bereich

## Patentansprüche

1. Stapelbarer Einkaufswagen mit einer Schiebeeinrichtung (2) und einem Fahrgestell (3) mit Rollen (4), wobei das Fahrgestell (3) einen Korb (5) trägt, wobei die Schiebeeinrichtung (2) ein Münzpfandsystem (6) aufweist und wobei am Münzpfandsystem (6) eine Haltevorrichtung (8) vorgesehen ist, **dadurch gekennzeichnet, dass** die Haltevorrichtung (8) mindestens eine Klammer (9) aufweist, wobei die mindestens eine Klammer (9) wechselbar am Münzpfandsystem (6) angeordnet ist.

2. Stapelbarer Einkaufswagen nach Anspruch 1, **dadurch gekennzeichnet, dass** die Haltevorrichtung (8) einteilig ausgebildet ist.

3. Stapelbarer Einkaufswagen nach den Ansprüchen 1 und 2, **dadurch gekennzeichnet, dass** die Haltevorrichtung (8) mehrteilig ausgebildet ist.

4. Stapelbarer Einkaufswagen nach den Ansprüchen 1 bis 3, **dadurch gekennzeichnet, dass** die Haltevorrichtung (8) einen Handscanner (10) aufnimmt.
